# EUROPÄISCHE PATENTSCHRIFT

(11) **EP 0 923 749 B1**
(45) Veröffentlichungstag und Bekanntmachung des Hinweises auf die Patenterteilung: **12.12.2001**
(21) Anmeldenummer: 97909229.3
(22) Anmeldetag: 02.09.1997
(51) Int. Cl.: G02B 6/28, G02B 6/32

(54) **LICHTÜBERTRAGUNGSVORRICHTUNG**
LIGHT-TRANSMITTING DEVICE
DISPOSITIF DE TRANSMISSION DE LUMIERE

(30) Priorität: 03.09.1996 DE 19635499
(43) Veröffentlichungstag der Anmeldung: 23.06.1999
(73) Patentinhaber: Lissotschenko, Vitalij, 44149 Dortmund (DE); Hentze, Joachim, 59457 Werl (DE)
(72) Erfinder: Lissotschenko, Vitalij, 44149 Dortmund (DE); Hentze, Joachim, 59457 Werl (DE)
(74) Vertreter: Basfeld, Rainer, Dr. Dipl.-Phys.
(86) Internationale Anmeldenummer: EP9704779
(87) Internationale Veröffentlichungsnummer: WO9810317

(56) Entgegenhaltungen:
- EP-A- 0 154 391
- EP-A- 0 317 153
- EP-A- 0 506 438
- DE-A- 4 203 727
- FR-A- 2 685 965
- US-A- 4 933 649
- PATENT ABSTRACTS OF JAPAN vol. 013, no. 116 (P-845), 22.März 1989 & JP 63 291012 A (HOYA CORP), 28.November 1988,

## Beschreibung

Die Erfindung betrifft eine Lichtübertragungsvorrichtung, insbesondere ein faseroptisches Lichtübertragungssystem zur Leistungsübertragung, mit einem aus einer Mehrzahl von Lichtleitfasern gebildeten Lichtleitfaserbündel, an dem mindestens ein Kopplungselement zum Ein- bzw. Auskoppeln eines Lichtstrahlbündels angeordnet ist, wobei ein Kopplungselement ein Kopplerarray mit mehreren linsen, die in Zellen angeordnet sind, aufweist.

Derartige Lichtübertragungsvorrichtungen werden überall dort eingesetzt, wo das von einer Lichtquelle emittierte Licht an einen definierten Ort übertragen werden soll. Die Anwendungsmöglichkeiten reichen dabei von der Übertragung modulierter Signale kleiner Leistung in der Nachrichtentechnik bis zu Lichtstrahlbündeln hoher Energiedichte, beispielsweise energiereicher Laserstrahlen zur Materialbearbeitung und für medizinische Anwendungen.

Lichtübertragungssysteme, bei denen das Licht durch Lichtleitfasern übertragen wird, zeichnen sich zum einen durch gute Übertragungseigenschaften, beispielsweise geringe Leistungsverluste, aus und sind zum anderen mechanisch so flexibel, daß mit ihrer Hilfe auch in ansonsten schwer zugängliche Bereich eingestrahlt werden kann. Die Anwendungen reichen deswegen von optischer Datenübertragung bis hin zu endoskopischen Beleuchtungsvorrichtungen in der Medizintechnik.

Das Licht wird in eine Lichtleitfaser angekoppelt, indem die Lichtquelle auf ein Ende, d.h. eine Stirnfläche der Lichtleitfaser fokussiert wird. Am anderen Ende der Lichtleitfaser erfolgt der Lichtaustritt ebenfalls über die Stirnfläche, wobei gegebenenfalls wiederum Auskopplungselemente vorgeschaltet sind, beispielsweise Kollimatoren oder dergleichen.

Während in der Nachrichtentechnik lediglich Lichtsignale geringer Leistung verwendet werden, deren Übertragung problemlos mittels einer einzigen Lichtleichtfaser, beispielsweise einer Monomode- oder Multimode-Glasfaser, erfolgen kann, kommt es bei der Übertragung höherer Lichtleistungen, beispielsweise zur Materialbearbeitung oder in der Chirugie, zu Problemen. Mittels einer einzigen Lichtleitfaser ist nämlich nur eine begrenzte Leistung übertragbar, bei deren Überschreitung Schäden bis hin zur Zerstörung der Faser auftreten. Höhere Lichtleistungen müssen deswegen auf mehrere Lichtleitfasern verteilt werden, die in der Regel zu einem Faserbündel zusammengefaßt werden. Zur Einkopplung des Lichts in ein derartiges Lichtleitfaserbündel ist es bisher nach dem Stand der Technik üblich, eine Lichtquelle, beispielsweise einen leistungsstarken Laser, über Kopplungselemente wie Kondensorsysteme oder dergleichen die Lichtquelle auf der Stirnfläche des Faserbündels abzubilden, d.h. zu fokussieren. Auf diese Weise kann zwar sichergestellt werden, daß die über den Querschnitt des Lichtleitfaserbündels gemittelte Energiedichte den kritischen Wert pro Faser nicht überschreitet. Allerdings ist die Energiedichte über den Querschnitt des Lichtstrahlbündels in der Regel nicht homogen verteilt, so daß es durch lokale Schwankungen zu einer Überlastung und Beschädigung einzelner Lichtleitfasern eines Faserbündels kommen kann. Es ist offensichtlich, daß durch solche Schäden ein Lichtleitfaserbündel bereits nach kurzer Zeit nicht mehr einsetzbar ist. Alternativ könnte zwar ein Lichtleitfaserbündel mit größerem Querschnitt verwendet werden, bei dem die mittlere Energiedichte pro Faser herabgesetzt werden könnte. Diese Maßnahme würde aber wiederum zusätzliche Fokussiereinrichtungen zur Auskopplung aus dem Faserbündel erfordern, was natürlich wiederum einen erheblichen Aufwand bedeutet.

Ein weiteres Problem ergibt sich daraus, daß, selbst wenn die Fasern im Faserbündel dicht gepackt sind, zwischen ihnen zwickelförmige Zwischenräume verbleiben und außerdem auch nur das in den Kernbereich der Stirnfläche einer Lichtleitfaser eintretende Licht weitergeleitet wird. Als Folge daraus wird nicht das gesamte auf die Stirnfläche eines Lichtleitfaserbündels einfallende Licht tatsächlich übertragen, so daß der Gesamtwirkungsgrad in unerwünschter Weise verringert wird.

Eine Lichtübertragungsvorrichtung der eingangs genannten Art ist aus dem Jap. Pat. Abstract zu JP 63-291012 A bekannt. In der darin beschriebenen Lichtübertragungsvorrichtung ist einer jeden Lichtleitfaser des Lichtleitfaserbündels jeweils eine kleine sphärische Linse zugeordnet. Die sphärischen Linsen sind in dem beschriebenen Ausführungsbeispiel auf einer Kreisfläche aneinanderliegend nebeneinander angeordnet, so daß beispielsweise eine Linse in der Mitte und sechs weitere Linsen kreisförmig darum herum angeordnet sind. Auf dieses Array von sphärischen Linsen kann das von der Lichtquelle ausgehende Licht beispielsweise in Form eines parallelen Lichtstrahls auftreffen.

Aus der französischen Offenlegungsschrift FR 2 685 965 A1 ist eine Lichtübertragungsvorrichtung bekannt, die der vorgenannten Lichtübertragungsvorrichtung der japanischen Patentanmeldung JP 63-291012 A hinsichtlich des Einkoppelns in das Lichtleitfaserbündel entspricht und somit auch die gleichen Nachteile aufweist.

Aus der US 5,181,224 ist es bekannt, das von einer Laserdiode ausgehende Licht vermittels zweier jeweils beispielsweise planer konvexer Zylinderlinsen, deren Zylinderachsen senkrecht zueinander stehen, auf einen im wesentlichen kreisförmigen beugungsbegrenzten Bereich zu fokussieren. Bei der vorgenannten US-Patentschrift werden unterschiedlich starke Zylinderlinsen verwendet, um die bei herkömmlichen Laserdioden in Richtung der sogenannten "fast axis" und in Richtung der sogenannten "slow axis" unterschiedlich divergente Strahlung unterschiedlich stark zu fokussieren.

Aus dem US-Patent US 4,203,652 sind ebenfalls auf unterschiedliche Art und Weise hintereinander angeordnete Zylinderlinsen bekannt, die Teil einer Lichtübertragungsvorrichtung sind, die das von einer Halbleiterlaserdiode ausgehende in zueinander senkrechten Richtungen unterschiedlich divergente Licht auf einen im wesentlichen kreisförmigen Brennfleck fokussieren können.

Im Hinblick auf die Lösung der vorgenannten Probleme ergibt sich die Aufgabe der Erfindung, bei der Übertragung hoher Energiedichten mit einem Lichtleitfaserbündel die Beschädigung einzelner Fasern zu vermeiden und den Wirkungsgrad zu verbessern.

Zur Lösung dieser Aufgabe schlägt die Erfindung eine Anordnung gemäß Anspruch 1 vor. Durch die Zylinderlinsenarrays, die entweder aus separaten Einzellinsen zusammengesetzt sind oder jeweils als monolithisches Bauelement ausgebildet sind, wird, gegebenenfalls durch Vorschaltung einer weiteren Linse, ein Homogenisator gebildet. Eine Zelle wird jeweils am Kreuzungspunkt zweier Zylinderlinsen gebildet. Dadurch wird das einfallende Lichtstrahlbündel jeweils in der Verlängerung der durch diesen Kreuzungspunkt gehenden Längsachse auf das Ende einer Lichtleitfaser abgebildet.

Das erfindungsgemäß in dem Kopplungselement integrierte Kopplerarray weist vorzugsweise rasterförmig angeordnete Linsen auf, die insgesamt eine Mehrzahl von Zellen definieren. Das optische System einer jeden Zelle ist bevorzugt so ausgelegt, daß der gesamte Querschnitt oder zumindest ein großer Teil des Querschnitts des einfallenden Lichtstrahlbündels auf der Eintritts- oder Austrittsfläche einer Lichtleitfaser fokussiert werden. Der Abstand zwischen den Enden der Lichtleitfasern und dem Kopplerarray ist so eingestellt, daß das pro Zelle fokussierte Lichtstrahlbündel jeweils den lichtleitenden Querschnitt einer einzelnen Lichtleitfaser optimal ausleuchtet.

Der besondere Vorteil der erfindungsgemäßen Lichtübertragungsvorrichtung ergibt sich daraus, daß das einfallende Licht durch das Kopplerarray optimal auf die einzelnen Lichtleitfasern eines Lichtleitfaserbündels verteilt wird. Auf diese Weise wird sichergestellt, daß die eingestrahlte Lichtleistung gleichmäßig auf alle Einzelfasern des Faserbündels aufgeteilt wird. Durch diese Homogenisierung wird eine Beschädigung einzelner Fasern durch Überlastung nahezu ausgeschlossen.

Ein weiterer Vorteil ergibt sich daraus, daß jeder Zelle des Kopplerarrays individuell eine Lichtleitfaser zugeordnet ist. Dadurch ist es möglich, die Lichtleistung pro Zelle ausschließlich auf den zentralen, lichtleitenden Bereich auf der Stirnfläche am Ende einer einzelnen Lichtleitfaser zu bündeln. Das bedeutet, daß keine Lichtleistung mehr durch Absorption in den unempfindlichen Randbereichen einer Lichtleitfaser sowie in den Zwickeln zwischen den Lichtleitfaser im Lichtleitfaserbündel absorbiert wird und nicht mehr nutzbar ist. Auf diese Weise wird der Wirkungsgrad gegenüber faseroptischen Lichtübertragungsvorrichtungen gemäß dem Stand der Technik erheblich gesteigert.

In einer vorteilhaften Ausführungsform sieht die Erfindung vor, daß jeweils in Achsrichtung vor einer Linse ein Ende einer Lichtleitfaser angeordnet ist. Hierbei weist das Linsenarray eine Mehrzahl von bevorzugt rasterförmig angeordneten Linsen auf, die jeweils eine Zelle bilden. Jede einzelne Linse des Arrays kann, zur Korrektur der sphärischen Abberation, asphärischasphärisch ausgebildet sein. Vorzugsweise bildet jede Linse den gesamten Querschnitt des Lichtstrahlbündels oder zumindest einen größeren Teil davon auf der lichtleitenden Fläche einer Lichtleitfaser auf deren Stirnfläche ab.

In den vorgenannten Ausführungsformen sind die Kopplerarrays vorzugsweise als monolithische Elemente ausgebildet. Derartige monolithische Elemente haben den Vorteil, daß sie rationell mit modernen Herstellungsverfahren mit hoher Genauigkeit einstückig herstellbar sind und somit eine Dejustierung der einzelnen Linsen gegeneinander ausgeschlossen wird. Der Justieraufwand bei der Herstellung des Lichtübertragungssystems wird damit ebenfalls reduziert.

In einer vorteilhaften Ausführungsform der Erfindung bilden die an dem Lichtleitfaserbündel angebrachten Kopplungselemente ein Strahlformungssystem. Hierbei ist es sowohl denkbar, daß ein erfindungsgemäßes Kopplungselement mit einem Kopplerarray entweder nur als Einkopplungs- oder Auskopplungselement am Eingang bzw. Ausgang des Lichtleitfaserbündeis angeordnet ist, wobei dieses dann jeweils bereits ein Strahlformungssystem bildet, mit dem die gewünschten Strahiparameter zur Verfügung gestellt werden. Dadurch kann beispielsweise ein gaußförmiges Intensitätsprofil vorgegeben werden, wie es häufig zur Materialbearbeitung oder für medizinische Anwendungen gefordert wird. Gleichfalls ist es möglich, daß sowohl am Eingang als auch Ausgang des Lichtleitfaserbündels ein erfindungsgemäßes Kopplungselement angebracht ist, wobei die Kopplerarrays, gegebenenfalls mit weiteren optischen Elementen wie Kollimatorlinsen oder dergleichen, zusammen ein Strahlformungssystem bilden, mit dem das Intensitätsprofil und/oder der Strahlquerschnitt nahezu beliebig vorgebbar ist.

Ob ein oder zwei erfindungsgemäße Kopplungselemente mit Kopplerarrays am Eingang und/oder Ausgang des Lichtleitfaserbündels angeordnet sind, richtet sich nach dem konkreten Einsatzzweck des jeweiligen Lichtübertragungssystems. Um beispielsweise ein Lichtstrahlbündel großer Leistung, beispielsweise aus einem leistungsstarken, stationären Laser, an mehrere Arbeitsplätze zu verteilen, wird ein erfindungsgemäßes Einkopplungselement vor den Eingang des Lichtleitfaserbündels gesetzt. Die Ausgänge der einzelnen Lichtleitfasern kommen flexibel einzeln oder in Teilbündeln an unterschiedlichen Anwendungsplätzen zum Einsatz. An den Enden dieser Einzelfasern bzw. Teilfaserbündel lassen sich selbstverständlich je nach Bedarf wiederum erfindungsgemäße Kopplungselemente als Auskopplungselemente anbringen.

Eine bevorzugte Ausführungsform der Erfindung sieht vor, daß die Lichtleitfasern des Lichtleitfaserbündels vor dem Kopplerarray in einem Faserhalter gehaltert sind. In dem Faserhalter sind die Einzelfasern in der durch das Kopplerarray vorgegebenen Anordnung fixiert. Dadurch werden die Eingangs- bzw. Ausgangsflächen der Lichtleitfasern optimal vor dem Kopplerarray angeordnet, so daß eine Dejustierung, die zu einer ungleichmäßigen Ausleuchtung des Lichtleitfaserbündels führen könnte, weitestgehend ausgeschlossen wird. Zu diesem Zweck ist der Faserhalter, der beispielsweise als Locharray mit demselben Rastermaß wie ein matrixförmiges Kopplerarray ausgebildet ist, dem Koppelelement fest mit dem Kopplerarray verbunden.

Die Ausführung des Faserhalters als Locharray, dessen Löcher mit den Zellen des Kopplerarrays korrespondieren, ist besonders zweckmäßig mit geringem Aufwand herstellbar und einfach in der Handhabung. Die praktische Ausführung läßt sich beispielsweise realisieren, indem in eine Platte im Rastermaß des Kopplerarrays eine Vielzahl von parallelen Bohrungen angebracht sind, in denen die Enden der einzelnen Lichtleitfasern eingesteckt und beispielsweise durch Verkleben, Verschweißen oder dergleichen fixiert werden.

Vorzugsweise weist das Kopplungselement weiterhin einen optischen Modulator auf. Derartige Modulatoren können beispielsweise Strahlblenden, Masken oder auch elektro-optische Modulatoren sein, die eine gezielte Beeinflussung der Strahlparameter ermöglichen.

Die Möglichkeiten zur Beeinflussung der Strahlgeometrie und des Intensitätsprofils werden dadurch nochmals erweitert, daß jeweils einer Zelle des Kopplerarrrays ein elektro-optischer Modulator zugeordnet ist. Damit ist die pro Lichtleitfaser übertragene Leistung gezielt einstellbar, so daß beispielsweise eine definierte Vorgabe des Ausgangs-Strahlprofils erfolgen kann.

Weiterhin es vorteilhaft, daß das erfindungsgemäße Kopplungselement in einem Steckverbinder integriert ist. Durch diese Maßnahme wird die Handhabung erleichtert, indem beispielsweise unterschiedliche Lichtübertragungssysteme mittels des Steckverbinders problemlos an unterschiedlichen Lichtquellen verwendbar sind. Auch Verlängerungsleitungen lassen sich auf diese Weise einfach realisieren.

Ein Ausführungsbeispiel einer erfindungsgemäßen Lichtübertragungsvorrichtung ist im folgenden anhand der Zeichnung näher erläutert. im einzelnen zeigen:
- Fig. 1: ein erfindungsgemäßes Lichtübertragungssystem in schematischer Schnittdarstellung;
- Fig. 2: eine Ansicht auf ein erfindungsgemäßes Kopplerarray in Strahllängsrichtung.

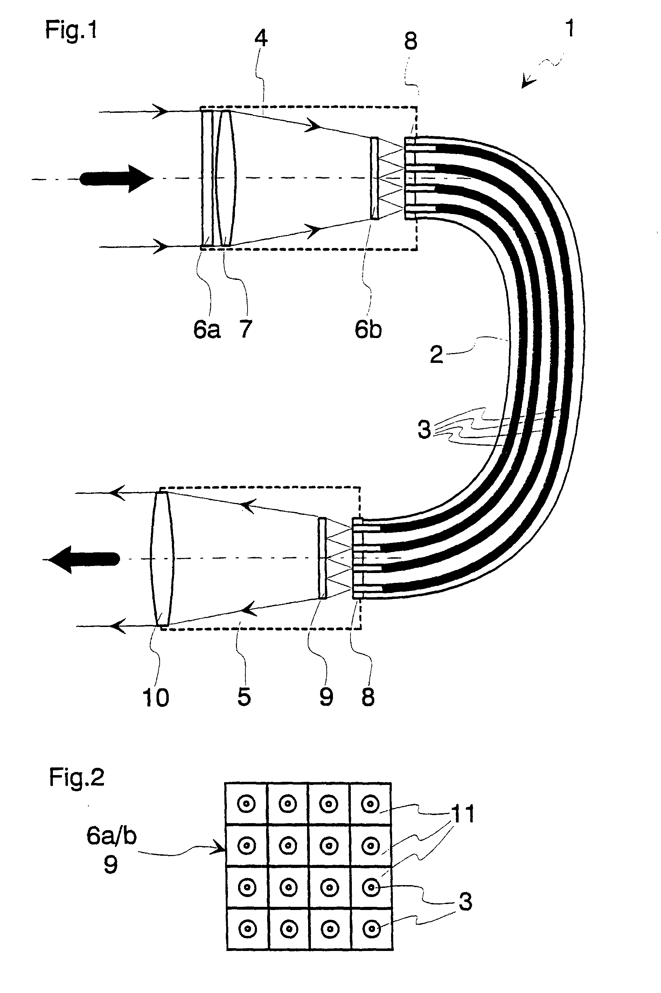

In Fig.1 ist die Lichtübertragungsvorrichtung als Ganzes mit dem Bezugszeichen 1 versehen. Sie besteht im wesentlichen aus einem Lichtleitfaserbündel 2, welches aus einer Mehrzahl von Lichtleitfasern 3 gebildet wird, an dessen Enden ein Einkopplungselement 4 sowie ein Auskopplungselement 5 angebracht sind.

Das Einkopplungselement 4 weist zwei hintereinander angeordnete, gekreuzte Zylinderlinsenarrays 6a und 6b auf. Diese bilden zusammen ein Kopplerarray 6a/b.

In der Darstellung von links ist in das Zylinderlinsenarray 6a ein paralleles oder annähernd paralleles Lichtstrahlbündel, beispielsweise aus einem Laser, einstrahlbar, welches in der Zeichnung mit einem Pfeil angedeutet ist. In Strahlrichtung hinter dem Zylinderlinsenarray 6a ist eine Linse 7 angeordnet, die den Strahlquerschnitt auf die Fläche des kleineren Zylinderlinsenarrays 6b verengt.

In Strahlrichtung hinter dem Kopplerarray 6a/b, d. h. in Strahlrichtung hinter dem zweiten Zylinderlinsenarray 6b, ist ein Faserhalter 8 angeordnet. Dieser ist bevorzugt als Locharray ausgebildet, wobei eine Vielzahl von Bohrungen, die in dieser Darstellung nicht erkennbar sind, in dem durch das matrixförmige Kopplerarray 6a/b vorgegebenen Raster angeordnet sind. In diesen sind die Enden der einzelnen Lichtleitfasern 3 des Lichtleitfaserbündels 2 derart fixiert, daß deren Eingangsquerschnitt in der Fokusfläche des Kopplerarrays 6a/b liegt.

Ausgangsseitig ist an dem Lichtleitfaserbündel 2 wiederum ein Faserhalter 8 angebracht, der allerdings mit dem Auskopplungselement 5 verbunden ist. Darin ist in Strahlrichtung hinter dem Faserhalter 8 ein Kopplerarray 9 angeordnet. Dieses ist als monolithisches Linsenarray ausgebildet, dessen Einzellinsen im selben Raster angeordnet sind wie die Bohrungen in dem Faserhalter 8.

Ausgangsseitig ist in dem Auskopplungselement 5 in Strahlrichtung hinter dem Kopplerarray 9 eine Kollimatorlinse 10 angeordnet, die das divergent austretende Strahlbündel parallelisiert. Das austretende, parallele oder annähernd parallele Lichtstrahlbündel ist wiederum mit einem Pfeil angedeutet.

Figur 2 zeigt schematisch eine Ansicht in Strahlrichtung auf das Kopplerarray 6a/b bzw. 9 mit den dahinter angeordneten Stirnflächen der Enden der einzelnen Lichtleitfasern 3.

Aus dieser Ansicht geht besonders gut die rasterförmige Anordnung der Lichtleitfasern 3 in dem nicht sichtbaren Faserhalter hervor, die mit den Zellen 11 jeweils korrespondiert.

Die Vorteile des dargestellten erfindungsgemäßen Lichtübertragungssytems 1 ergeben sich daraus, daß mittels der Kopplerarrays 6a/b in dem Einkopplungselement 4 trotz eines im Einzelfall ungleichmäßigen Intensitätsprofils des eintretenden Lichtstrahlbündels die Lichtenergie gleichmäßig auf die einzelnen Lichtleitfasern 3 des Lichtleitfaserbündels 2 verteilt wird. Dadurch ist eine Überlastung einzelner Lichtleitfasern 3 praktisch ausgeschlossen.

Ein weiterer Vorteil ist, daß das eintretende Strahlbündel über das Kopplerarray 6a/b und die Linse 7 derart auf die Eingangsflächen der in dem Faserhalter 8 fixierten Lichtleitfasern 3 fokussiert wird, daß sich ein besonders guter Wirkungsgrad der Übertragung ergibt.

Zusammen mit dem Auskopplungselement 5, welches ebenfalls ein Kopplerarray 9 aufweist, wird praktisch ein Strahlformungssystem gebildet. Dieses ermöglicht eine definierte Anpassung der Strahlparameter.

Insgesamt ermöglicht das erfindungsgemäße Übertragungssystem 1 eine optimale Ausnutzung eines Lichtleitfaserbündels 2 bei der Übertragung hoher Lichtleistungen.

## Patentansprüche

1. Lichtübertragungsvorrichtung, insbesondere ein faseroptisches Lichtübertragungssystem zur Leistungsübertragung, mit einem aus einer Mehrzahl von Lichtleitfasern gebildeten Lichtleitfaserbündel, an dem mindestens ein Kopplungselement zum Ein- bzw. Auskoppeln eines Lichtstrahlbündels angeordnet ist, wobei ein Kopplungselement (4, 5) ein Kopplerarray (6a/b, 9) mit mehreren Linsen, die in Zellen (11) angeordnet sind, aufweist,
**dadurch gekennzeichnet, daß**
das Kopplerarray (6a/b, 9) in Strahlrichtung hintereinander angeordnete, gekreuzte Zylinderlinsenarrays (6a, 6b) aufweist, sowie eine zwischen diesen angeordnete Linse (7), derart, daß über die Zylinder linsen arrays (6a, 6b) und die Linse (7) ein auf ein koppler array ein fallendes Lichtstrahlbündel jeweils auf die Eingangsflächen der Lichtleitfasern (3) fokussiert wird, wobei das einfallende Lichtstrahlbündel in einer Fläche mehr fach fokussiert wird und die Linse (7) den Strahlquerschnitt auf die Fläche des nach geordneten Zylinder linsen arrays verengt.

2. Vorrichtung nach Anspruch 1, **dadurch gekennzeichnet, daß** jeweils in Achsrichtung vor einer Linse ein Ende einer Lichtleitfaser (3) angeordnet ist.

3. Vorrichtung nach Anspruch 1, **dadurch gekennzeichnet, daß** in dem Kopplerarray (6a/b, 9) die Zellen (11) rasterförmig angeordnet sind.

4. Vorrichtung nach Anspruch 1, **dadurch gekennzeichnet, daß** eine Zelle (11) eine asphärische Linse aufweist.

5. Vorrichtung nach Anspruch 1, **dadurch gekennzeichnet, daß** eine Kopplerarray (6a, 6b, 9) als monolithisches Element ausgebildet ist.

6. Vorrichtung nach einem oder mehreren der Ansprüche 1 bis 7, **dadurch gekennzeichnet, daß** die Kopplungselemente (4, 5) ein Strahlformungssystem bilden.

7. Vorrichtung nach Anspruch 1, **dadurch gekennzeichnet, daß** ein Kopplungselement mit einem Kopplerarray (6a/b) als Einkopplungselement (4) am Eingang des Lichtleitfaserbündels (2) angeordnet ist.

8. Vorrichtung nach Anspruch 1, **dadurch gekennzeichnet, daß** ein Kopplungselement mit einem Kopplerarray (9) als Auskopplungselement (5) am Ausgang des Lichtleitfaserbündels (2) angeordnet ist.

9. Vorrichtung nach Anspruch 1, **dadurch gekennzeichnet, daß** die Lichtleitfasern (3) des Lichtleitfaserbündels (2) vor dem Kopplerarray (6a/b, 9) in einem Faserhalter (8) gehaltert sind.

10. Vorrichtung nach Anspruch 11, **dadurch gekennzeichnet, daß** der Faserhalter (8) als Locharray ausgebildet ist, dessen Löcher mit den Zellen (11) des Kopplerarrays (6a/b, 9) korrespondieren.

11. Vorrichtung nach Anspruch 1, **dadurch gekennzeichnet, daß** das Kopplungselement (4, 5) einen optischen Modulator aufweist.

12. Vorrichtung nach Anspruch 13, **dadurch gekennzeichnet, daß** jeweils einer Zelle (11) des Kopplerarrays (6a/b, 9) ein elektro-optischer Modulator zugeordnet ist.

13. Vorrichtung nach Anspruch 1, **dadurch gekennzeichnet, daß** das Kopplungselement (4, 5) in einem Steckverbinder integriert ist.

## Claims

1. Light transmitting device, in particular an optical fibre light transmission system for power transmission, with a bundle of optical fibres made of a plurality of optical fibres at which at least one coupling element is arranged for coupling and decoupling a bundle of light rays, a coupling element (4, 5) comprising a coupler array (6a/b, 9) with several lenses which are arranged in cells (11), **characterised in that** the coupler array (6a/b, 9) comprises crossed cylindrical lens arrays (6a, 6b) arranged one behind the other in the direction of the rays as well as a lens (7) arranged between the latter in such a manner that an incident bundle of light rays coming in through the cylindrical lens arrays (6a, 6b) and the lens (7) and impinging on the coupling array is focused to the inlet surface of the optical fibres (3), the incident bundle of light rays being focused several times in one surface and the lens (7) is narrowing the cross section of the ray corresponding to the surface of the downstream cylindrical lens array.

2. Device as claimed in claim 1, **characterised in that** in each case an end of an optical fibre (3) is arranged upstream of a lens in the axial direction.

3. Device as claimed in claim 1, **characterised in that** the cells (11) in the coupler array (6a/b, 9) are arranged in the form of a raster.

4. Device as claimed in claim 1, **characterised in that** one cell (11) has an aspherical lens.

5. Device as claimed in claim 1, **characterised in that** one coupler array (6a, 6b, 9) is formed as a monolithic element.

6. Device as claimed in one or several of claims 1 to 5, **characterised in that** the coupling elements (4, 5) form a beam-forming system.

7. Device as claimed in claim 1, **characterised in that** a coupling element having a coupler array (6a/b) is arranged at the inlet of the bundle (2) of optical fibres as initial coupling element (4).

8. Device as claimed in claim 1, **characterised in that** a coupling element having a coupler array (9) is arranged at the outlet of the bundle (2) of optical fibres as decoupling element (5).

9. Device as claimed in claim 1, **characterised in that** the optical fibres (3) of the bundle (2) of optical fibres are mounted in a fibre holder (8) arranged upstream of the coupling array (6a/b, 9).

10. Device as claimed in claim 9, **characterised in that** the fibre holder (8) is in the form of a hole array the holes of which correspond to the cells (11) of the coupler array (6a/b, 9).

11. Device as claimed in claim 1, **characterised in that** the coupling element (4, 5) comprises an optical modulator.

12. Device as claimed in claim 11, **characterised in that** in each of the cells (11) of the coupler array (6a/b, 9) is associated with an electro-optical modulator.

13. Device as claimed in claim 1, **characterised in that** the coupling element (4, 5) is integrated in a plug connector.

## Revendications

1. Dispositif de transmission de lumière, en particulier un système de transmission de lumière en fibre optique pour la transmission de puissance, avec un faisceau de fibre de guidage de lumière formé par une pluralité de fibres de guidage de lumière, dans lequel il est disposé au moins un élément de couplage pour le couplage ou le découplage d'un faisceau de rayon de lumière, dans lequel un élément de couplage (4,5) présente un réseau de couplage (6a/b, 9) avec plusieurs lentilles disposées dans des cellules (11), **caractérisé en ce qu'**un réseau de couplage (6a/b) présente un réseau de lentilles en forme cylindrique croisé, disposé l'un derrière l'autre suivant la direction du rayon, ainsi qu'une lentille (7) disposée entre celles-ci, de façon qu'à travers le réseau de lentilles en forme cylindrique (6a/b) et la lentille (7) un faisceau de rayon de lumière pénétrant un réseau de couplage est focalisé sur la surface d'entrée de la fibre de guidage de lumière (3), dans lequel le faisceau de rayon de lumière pénétrant est focalisé plusieurs fois sur une surface et la lentille (7) rétrécit la section du rayon sur la surface du réseau de lentilles en forme cylindrique postérieure.

2. Dispositif selon la revendication 1, **caractérisé en ce que** chaque extrémité de chaque fibre de guidage de lumière (3) est disposée devant une lentille suivant la direction axiale.

3. Dispositif selon la revendication 1, **caractérisé en ce que** dans le réseau de couplage (6a,6b,9) sont disposées les cellules (11) en forme de trame.

4. Dispositif selon la revendication 1, **caractérisé en ce qu'**une cellule (11) présente une lentille sphérique.

5. Dispositif selon la revendication 1, **caractérisé en ce qu'**un réseau de couplage (6a, 6b, 9) est formé comme un élément monolithique.

6. Dispositif selon une ou plus des revendications de 1 a 7, **caractérisé en ce que** les éléments de couplage (4, 5) forment un système en forme de rayon.

7. Dispositif selon la revendication 1, **caractérisé en ce qu'**un élément de couplage avec un réseau de couplage (6a/b) est disposé à l'entrée du faisceau de fibre de guidage de lumière (2) comme élément de couplage (4).

8. Dispositif selon la revendication 1, **caractérisé en ce qu'**un élément de couplage avec un réseau de couplage (9) est disposé à la sortie du faisceau de fibre de guidage de lumière (2) comme élément de découplage (5).

9. Dispositif selon la revendication 1, **caractérisé en ce que** les fibres de guidage de lumière (3) du faisceau de fibre de guidage de lumière (2) sont supportées devant le réseau de couplage (6a/b, 9) dans un support pour fibre (8).

10. Dispositif selon la revendication 9, **caractérisé en ce que** le support pour fibre (8) est formé comme circuit perforé, dont les ouvertures correspondent avec les cellules (11) du réseau de couplage (6a/b, 9).

11. Dispositif selon la revendication 1, **caractérisé en ce que** l'élément de couplage (4,5) présente un modulateur optique.

12. Dispositif selon la revendication 11, **caractérisé en ce que** chaque cellule (11) du réseau de couplage (6a/b, 9) est associée à un modulateur optique électrique.

13. Dispositif selon la revendication 1, **caractérisé en ce que** l'élément de couplage (4,5) est intégré dans un élément de connexion.
